# EUROPEAN PATENT APPLICATION

(11) **EP 4 697 680 A1**
(43) Date of publication of application: **18.02.2026**
(21) Application number: 24822598.9
(22) Date of filing: 04.06.2024
(51) Int. Cl.: H04L 67/565

(54) **DATA SENSING METHOD AND SYSTEM, ELECTRONIC DEVICE, AND STORAGE MEDIUM**

(30) Priority: 15.06.2023 CN 202310717445
(71) Applicant: Shenzhen Xinguodu Technology Co., Ltd., Shenzhen, Guangdong 518000 (CN)
(72) Inventor: WEN, Yi, Shenzhen, Guangdong 518000 (CN); ZHOU, Xiaoxin, Shenzhen, Guangdong 518000 (CN); LIN, Hui, Shenzhen, Guangdong 518000 (CN)
(74) Representative: Gislon, Gabriele
(86) International application number: PCT/CN2024/097314
(87) International publication number: WO 2024/255647

(57) **Abstract**

Embodiments of the present application relate to the technical field of data processing, and provide a data sending method and system, an electronic device, and a storage medium. The method comprises: preprocessing data items in an initial data set, so as to attach data identifiers to the data items, and classifying the data items into corresponding object tags according to the data identifiers; in response to an acquisition request of a data acquisition policy of a POS terminal, determining a first region where the POS terminal is located and a region protocol corresponding to the first region; enabling or disabling the data items in the object tags according to the region protocol, and generating a data acquisition policy according to enabled data items and disabled data items; and issuing the data acquisition policy to the POS terminal, so that the POS terminal collects the data items according to the data acquisition policy. Therefore, system deployment does not need to be performed in different regions in a targeted manner according to regional protocols of different regions, thus the development cost and the maintenance difficulty of the system are reduced.

## Description

### TECHNICAL FIELD

The present disclosure relates to the field of data processing technologies, and in particular, to a data transmitting method and system, an electronic device, and a storage medium.

### BACKGROUND

An electronic product invokes near field communication (NFC) through a Point of Sale (POS) software installed on a POS terminal device to complete a card swiping payment, which needs to perform data collection according to a regional protocol to ensure a smooth transaction. However, data demands vary with different regional protocols in different regions. In related technologies, the system is deployed differently for different regions according to regional protocols of the different regions, which leads to high development costs and is not conducive to unified maintenance.

### SUMMARY

An objective of embodiments of the present disclosure is to provide a data transmitting method and system, an electronic device, and a storage medium, to reduce the development costs of the system and the difficulty of maintenance of the system.

To achieve the above objective, in accordance with a first aspect of the present disclosure, an embodiment provides a data transmitting method, which is applied to a management backend and includes:
establishing an initial dataset, preprocessing each of a plurality of data items in the initial dataset to be attached with a respective one of a plurality of data identifiers, and classifying each of the plurality of data items into a respective one of a plurality of object tags according to the respective data identifier; in response to a request from a point of sale, POS, terminal for acquiring a data acquisition policy, determining a first region where the POS terminal device is located and a regional protocol corresponding to the first region; performing enable or disable processing on the plurality of data items in the plurality of object tags according to the regional protocol to obtain an enabled data item and a disabled data item, and generating a data acquisition policy according to the enabled data item and the disabled data item; and delivering the data acquisition policy to the POS terminal device, for the POS terminal device to collect data items according to the data acquisition policy.

According to some embodiments of the present disclosure, establishing the initial dataset, preprocessing each of the plurality of data items in the initial dataset to be attached with the respective one of the plurality of data identifiers, and classifying each of the plurality of data items into the respective one of the plurality of object tags according to the respective data identifier: establishing the initial dataset, and adjusting formats of the plurality of data items in the initial dataset according to a preset format; identifying each of the plurality of data items whose format has been adjusted to obtain the respective data item identifier; acquiring an object tag categorization rule; and classifying each of the plurality of data items into the respective object tag according to the object tag categorization rule and the respective data item identifier.

According to some embodiments of the present disclosure, performing the enable or disable processing on the plurality of data items in the plurality of object tags according to the regional protocol to obtain the enabled data item and the disabled data item, and generating the data acquisition policy according to the enabled data item and the disabled data item includes: generating target data identifiers of the enabled data item and the disabled data item according to the regional protocol; searching the plurality of object tags according to the target data identifiers; and enabling the enabled data item, disabling the disabled data item, and summarizing the obtained enabled data item and disabled data item to generate the data acquisition policy, where the enabled data item is allowed to be accessed in the POS terminal device, and the disabled data item is prohibited from being accessed in the POS terminal device.

According to some embodiments of the present disclosure, after generating the data acquisition policy, the method further includes: storing the data acquisition policy and establishing a mapping relationship between the data acquisition policy and the first region, such that when the request from the POS terminal device for acquiring a data acquisition policy is received, the data acquisition policy is invoked through the mapping relationship; and periodically maintaining and updating the data acquisition policy corresponding to the first region.

According to some embodiments of the present disclosure, the method further includes: searching, according to the request for acquiring a data acquisition policy, whether the data acquisition policy corresponding to the first region is stored locally; in response to the data acquisition policy corresponding to the first region being found, delivering the data acquisition policy to the POS terminal device.

According to some embodiments of the present disclosure, a default data acquisition policy is set in the management backend, and the method further includes: in response to location information transmitted by the POS terminal device being not received, delivering the default data acquisition policy to the POS terminal device; or in response to the request from the POS terminal device for acquiring a data acquisition policy not including the regional protocol corresponding to the first region, delivering the default data acquisition policy to the POS terminal device.

To achieve the above objective, in accordance with a second aspect of the present disclosure, an embodiment provides a data transmitting method, which is applied to a POS terminal and includes: acquiring execution permission of a terminal device, location information of a first region where the POS terminal device is located and a regional protocol corresponding to the first region in response to a target dataset acquisition instruction; sending a policy acquisition request to a management backend, for the management backend to perform enable or disable processing on a data item in an object tag according to the regional protocol and generate a data acquisition policy, where the policy acquisition request includes the location information of the first region and the regional protocol corresponding to the first region; receiving the data acquisition policy, collecting a plurality of target data items according to the data acquisition policy, and generating a target dataset according to the collected plurality of target data items; and uploading the target dataset to the management backend.

To achieve the above objective, in accordance with a third aspect of the present disclosure, an embodiment provides a data transmitting system, which is applied to a management backend and includes: a preprocessing module configured for establishing an initial dataset, preprocessing each of a plurality of data items in the initial dataset to be attached with a respective one of a plurality of data identifiers, and classifying each of the plurality of data items into a respective one of a plurality of object tags according to the respective data identifier; a regional protocol acquisition module configured for determining, in response to a request from a point of sale, POS, terminal for acquiring a data acquisition policy, a first region where the POS terminal device is located and a regional protocol corresponding to the first region; a data acquisition policy generation module configured for performing enable or disable processing on the plurality of data items in the plurality of object tags according to the regional protocol to obtain an enabled data item and a disabled data items, and generating a data acquisition policy according to the enabled data item and the disabled data item; and a data item acquisition module configured for delivering the data acquisition policy to the POS terminal device, for the POS terminal device to collect data items according to the data acquisition policy.

To achieve the above objective, in accordance with a fourth aspect of the present disclosure, an embodiment provides an electronic device, including a memory and a processor. The memory has a computer program stored therein. The computer program, when executed by the processor, causes the processor to implement the method according to any one of the embodiments of the first aspect.

To achieve the above objective, in accordance with a fifth aspect of the present disclosure, an embodiment provides a storage medium, which is a computer-readable storage medium and has a computer program stored therein, where the computer program, when executed by a processor, causes the processor to implement the method according to any one of the embodiments of the first aspect.

According to the data transmitting method and system, the electronic device, and the storage medium provided in the present disclosure, an initial dataset is established, data items in the initial dataset are preprocessed to attach data identifiers to the data items, and the data items are classified into corresponding object tags according to the data identifiers; in response to a request from a POS terminal device for acquiring a data acquisition policy, a first region where the POS terminal is located and a regional protocol corresponding to the first region are determined; enable or disable processing is performed on the data items in the object tags according to the regional protocol to obtain enabled data items and disabled data items, and a data acquisition policy is generated according to the enabled data items and the disabled data items; and the data acquisition policy is delivered to the POS terminal device, for the POS terminal device to collect data items according to the data acquisition policy. As such, all the regions share the same system, the system can generate corresponding data acquisition policies according to regional protocols of different regions, and the POS terminal device directly collects data items according to the corresponding data acquisition policy. Therefore, the system does not need to be deployed differently for different regions according to regional protocols of the different regions, such that the development cost and maintenance difficulty of the system are reduced.

### BRIEF DESCRIPTION OF DRAWINGS

FIG. 1 is a diagram of a structure of a data transmitting system according to an embodiment of the present disclosure;
FIG. 2 is a flowchart of a data transmitting method according to an embodiment of the present disclosure;
FIG. 3 is a diagram showing data items in a management backend;
FIG. 4 is a flowchart of an implementation of step S101 in FIG. 2;
FIG. 5 is a flowchart of an implementation of step S103 in FIG. 2;
FIG. 6 is a flowchart an implementation of the method after generating a data acquisition policy according to an embodiment of the present disclosure;
FIG. 7 is a flowchart of an implementation of a data transmitting method according to an embodiment of the present disclosure;
FIG. 8 is a flowchart of a data transmitting method according to yet another embodiment of the present disclosure;
FIG. 9 is a flowchart of an overall scheme according to an embodiment of the present disclosure;
FIG. 10 is a diagram of functional modules of a data transmitting system according to an embodiment of the present disclosure; and
FIG. 11 is a schematic structural diagram of hardware of an electronic device according to an embodiment of the present disclosure.

### DETAILED DESCRIPTION

To make the objectives, technical schemes, and advantages of the present disclosure clear, embodiments of the present disclosure are described in further detail with reference to accompanying drawings. It is to be understood that the specific embodiments described herein are merely used for illustrating the present disclosure, and are not intended to limit the present disclosure.

It is to be noted, although functional modules have been divided in the schematic diagrams of apparatuses and logical orders have been shown in the flowcharts, in some cases, the modules may be divided in a different manner, or the steps shown or described may be executed in an order different from the orders as shown in the flowcharts. The terms such as "first," "second" and the like in the description, the claims, and the accompanying drawings are used to distinguish similar objects, and are not necessarily used to describe a specific sequence or a precedence order.

Unless otherwise defined, meanings of all technical and scientific terms throughout the context are the same as those generally understood by those having ordinary skills in the art to which the present disclosure belongs. Terms used herein are merely intended to describe objectives of the embodiments of the present disclosure, but are not intended to limit the present disclosure.

An electronic product invokes near field communication (NFC) through a Point of Sale (POS) terminal to complete a card swiping payment, which needs to perform data collection according to a regional protocol to ensure a smooth transaction. Due to the wide range of applications of NFC technology, there are different regulations and standards for the application of NFC in different regions. Therefore, to ensure the compatibility and reliability of NFC in different regions, data acquisition and processing need to be performed according to the regional protocols of different regions. However, data to be collected also varies with regional protocols of different regions. This requires relevant technical personnel to deploy and develop the system differently according to regulations and standards of different regions, leading to increased difficulty and costs of development. In addition, as the regulations and standards in different regions may change at any time, this also brings great challenges to unified maintenance.

In view of the above, embodiments of the present disclosure provide a data transmitting method and system, an electronic device, and a storage medium. As such, corresponding data acquisition policies can be generated according to regional protocols of different regions, and data items can be directly collected by a POS terminal device according to its respective data acquisition policy. Therefore, the system does not need to be deployed differently for different regions according to regional protocols of the different regions, such that the development cost and maintenance difficulty of the system are reduced.

The data transmitting method and system, the electronic device, and the storage medium provided in the embodiments of the present disclosure will be described in detail through the following embodiments. The data transmitting method in the embodiments of the present disclosure is described first.

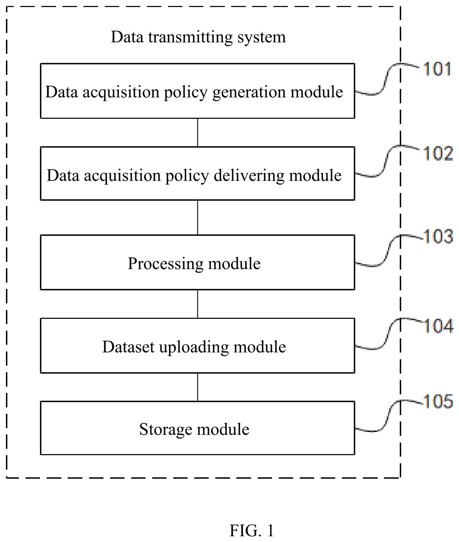

Referring to FIG. 1, in some embodiments, the data transmitting system includes a data acquisition policy forming module 101, a data acquisition policy delivering module 102, a processing module 103, a dataset uploading module 104, and a storage module 105.

In some embodiments, the processing module 103 can serve as a nerve center and command center of the data transmitting system. The processing module 103 can be configured to generate an operation control signal according to instruction operation codes (operation opcodes) and timing signals to implement control of instruction fetching and instruction execution. In some embodiments, the processing module 103 can be configured to control, according to the operation instruction, the data acquisition policy forming module 101 to generate data acquisition policies according to a regional protocol of each region, and control, according to the instruction, the data acquisition policy delivering module 102 to deliver a corresponding data acquisition policy to a POS terminal device. After summarizing collected data items into a dataset, the POS terminal device uploads the dataset to a management backend through the dataset uploading module 104.

In some embodiments, the storage module 105 can store an instruction or data just used or recycled by the processing module 103. In this way, when the processing module 103 needs to use the instruction or data again, the processing module 103 directly calls the instruction or data from the storage module 105, thereby avoiding repeated access, reducing the response time for the processing module 103, and thus improving the system efficiency. In some embodiments, the storage module can be configured to store the generated data acquisition policies each corresponding to a respective one of a plurality of regions, such that next time when a data acquisition policy is requested in a region, the respective policy can be directly sent to the POS terminal device.

The data transmitting method in the embodiments of the present disclosure can be described below through the following embodiments.

It should be noted that in the specific embodiments of the present disclosure, when related processing needs to be performed according to data related to an identity or characteristic of a user, such as user information, user behavior data, user history data, and user location information, the user's permission or consent will be obtained first. For example, when a data access request from a user is obtained, permission or consent of the user is first obtained. In addition, the collection, use, and processing of such data will comply with relevant laws, regulations, and standards. In the embodiments of the present disclosure, when sensitive personal information of the user needs to be acquired, a pop-up window is displayed or a confirmation page is redirected to for obtaining the user's individual permission or consent. Only after the user's individual permission or consent is explicitly obtained, user-related data necessary for the normal implementation of methods, devices or systems according to the embodiments of the present disclosure can be acquired.

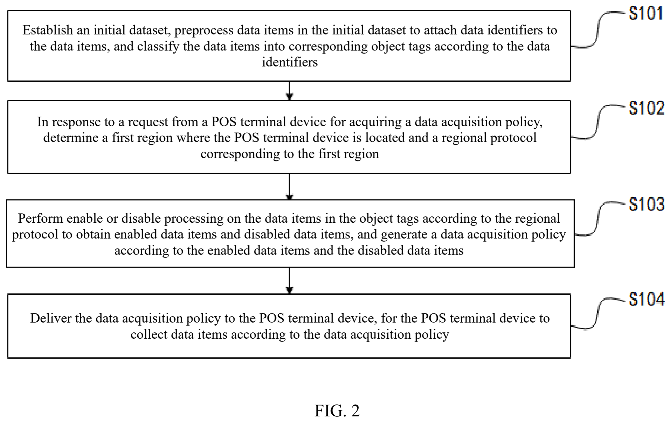

FIG. 2 is a flowchart of a data transmitting method according to an embodiment of the present disclosure. The method is applied to a management backend. The method in FIG. 2 can include, but be not limited to, the following steps S101 to S104.

At S101, an initial dataset is established, data items in the initial dataset are preprocessed to attach data identifiers to the data items, and the data items are classified into their respective object tags according to the data identifiers.

At S102, in response to a request from a POS terminal device for acquiring a data acquisition policy, a first region where the POS terminal device is located and a regional protocol corresponding to the first region are determined.

At S103, enable or disable processing is performed on the data items in the object tags according to the regional protocol to obtain enabled data items and disabled data items, and a data acquisition policy is generated according to the enabled data items and the disabled data items.

At S104, the data acquisition policy is delivered to the POS terminal device, for the POS terminal device to collect data items according to the data acquisition policy.

The POS terminal device has POS software installed thereon, and can replace a conventional POS machine to implement a data item collection function. NFC is a wireless communication technology usually used in the field of mobile payment. It can be understood that the POS terminal device can implement an NFC payment function by connecting to an NFC card reader. In an example, when a customer uses a bank card or electronic product with NFC information to pay, the customer only needs to place the bank card or electronic product near the POS terminal device, thus completing the payment process. In some embodiments, the POS terminal device communicates with an NFC card reader to implement the functions of reading payment information from a card or mobile phone of the customer and completing payment.

In some embodiments, the management backend is built on the data transmitting system and is controlled by the data transmitting system. In some embodiments, POS terminal devices in different regions share the same management backend, and the management backend can process regional protocols, generate data acquisition policies according to the regional protocols, and then send the data acquisition policies to the corresponding POS terminal devices. In some embodiments, the management backend can also view sales data, transaction volume, customer information, etc. according to the dataset uploaded by the POS terminal device for business analysis and decision-making. In some embodiments, the management backend can generate various statistical reports, such as turnover, sales, number of customers, etc., according to the dataset uploaded by the POS terminal device.

In some embodiments, the initial dataset is a set formed by collecting data items according to regional protocols of all regions and then summarizing all the data items involved in the regional protocols. It can be understood that since most regional protocols usually include some identical data items, data identifiers may be attached to all the data items collected. In some embodiments, the data items may be identified as transaction amount, transaction time, transaction location, transaction method, name, mobile phone number, identity card (ID) number, bank card number, Alipay account number, WeChat payment account number, POS machine model, device number, operating system version, system logs, exception information, etc. Further, the data items may also be identified as Arabic numerals or English letters. In an example, the transaction amount is identified as #1 and the transaction time is identified as #2. Alternatively, the transaction amount is identified as "A" and the transaction time is identified as "B", and so on.

In some embodiments, the data items can be classified into the corresponding object tags according to the data identifiers. In some embodiments, the data items may be identified by level or category. The following method may be adopted. In an implementation, different types of data items may be respectively classified into corresponding object tags. For example, the object tags can include transaction data, personal information, account information, device information, and the like. For specific data items under each category, for example, specific data items under the object tag "transaction data" include transaction amount, transaction time, transaction location, etc. In some embodiments, personal information such as name, mobile phone number, and identity card number may be classified into the object tag "personal information". In some embodiments, data items related to the POS device, e.g., device number and operating system version, may also be classified into the object tag "device information". It can be understood that the attachment of the data identifiers to the data items and the classification of the data items into object tags allow for a clearer understanding of different types of data items to better protect user privacy, and also make it convenient for the system to quickly find related data items according to a regional policy.

In some embodiments, the first region can be any region defined according to geographical locations, for example, can be a district, a city, a province, a country, etc., which is not particularly limited in the embodiments of the present disclosures. In some embodiments, the management backend can respond to the request from the POS terminal device for acquiring a data acquisition policy. Since the request for acquiring a data acquisition policy includes the location information of the first region where the POS terminal device is located and the regional protocol corresponding to the first region, the first region where the POS terminal device is located and the regional protocol corresponding to the first region can be determined according to the request for acquiring a data acquisition policy.

In some embodiments, the regional protocol is a document that informs a website or mobile software (the POS terminal device in the present disclosure) how to collect and use data items. In some embodiments, the POS terminal device can perform enable or disable processing on the data items in the object tags according to the regional protocol to obtain enabled data items and disabled data items, and generate a data acquisition policy according to the enabled data items and the disabled data items. In a case where the regional protocol of the first region allows acquisition of the transaction time and name and prohibits acquisition of the operating system version, the management backend can find the corresponding data items according to the object tag, and manage enabling or disabling of the data items according to the regional protocol. The corresponding object tag can be found according to the regional protocol, for example, the object tag to which the transaction time belongs is founded to be "transaction data", and the data item "transaction time" under the object tag of the transaction data is enabled. In some embodiments, the object tag to which the name belongs is found to be "personal information", and then the data item "name" under the object tag "personal information" is enabled. In some embodiments, the object tag to which the operating system version belongs is found to be "device information", and then the data item "operating system version" under the object tag "device information" is enabled. It can be understood that if a corresponding data item is enabled in the finally generated data acquisition policy, the POS terminal device can perform data acquisition on the data item; and if the corresponding data item is disabled, the POS terminal device prohibits data acquisition on the data item. It can be understood that regardless of whether the management backend performs enable or disable processing on the data items, the operation is based on the regional protocol.

In some embodiments, the management backend can search all data items in the object tag in the regional protocol according to the object tag, perform enable or disable processing on the corresponding data items according to the regional protocol, and finally generate a data acquisition policy. In some embodiments, a universal tag may further be set. The universal tag involves data items that can be accessed in all regional protocols, such that during the generation of the data acquisition policy, there is no need to perform additional enable or disable processing.

In some embodiments, after the management backend delivers the data acquisition policy to the POS terminal device, the POS terminal device can collect data items according to the data acquisition policy, summarize the collected data items into a target dataset, and upload the target dataset.

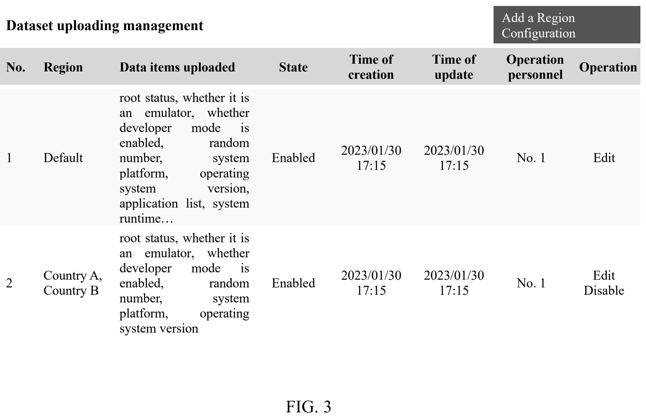

Referring to FIG. 3, the management backend can maintain and manage the target dataset uploaded by the POS terminal device. Further, data of the same data item can be placed under the same data item identifier, and regions involved the corresponding data items, whether the corresponding data items are in an enabled state or a disabled state, and the like may be displayed.

It can be understood that the management backend can perform data backup according to the target dataset sent by the POS terminal device to prevent data loss. In some embodiments, the management backend can perform statistics and analysis on the dataset. In some embodiments, the POS terminal device can support data sharing among multiple devices, and after the collected data is sent to the management backend, data synchronization can be implemented to facilitate data sharing among multiple terminal devices.

According to a data transmitting method and system, an electronic device, and a storage medium provided in the present disclosure, an initial dataset is established, data items in the initial dataset are preprocessed to attach data identifiers to the data items, and the data items are classified into corresponding object tags according to the data identifiers; in response to a request from a POS terminal device for acquiring a data acquisition policy, a first region where the POS terminal device is located and a regional protocol corresponding to the first region are determined; enable or disable processing is performed on the data items in the object tags according to the regional protocol to obtain enabled data items and disabled data items, and a data acquisition policy is generated according to the enabled data items and the disabled data items; and the data acquisition policy is delivered to the POS terminal device, for the POS terminal device to collect data items according to the data acquisition policy. As such, all the regions share the same system, which can generate corresponding data acquisition policies according to regional protocols of different regions. Accordingly, the POS terminal device directly collects data items according to the data acquisition policies. Therefore, the system does not need to be deployed differently for different regions according to regional protocols of the different regions, such that the development cost and maintenance difficulty of the system are reduced.

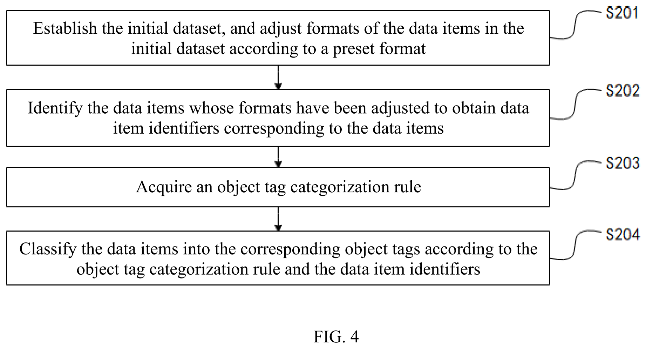

Referring to FIG. 4, step S101 includes, but is not limited to, the following steps S201 to S204. At S201, the initial dataset is established, and formats of the data items in the initial dataset are adjusted according to a preset format.

At S202, the data items whose formats have been adjusted are identified to obtain data item identifiers corresponding to the data items.

At S203, an object tag categorization rule is acquired.

At S204, the data items are classified into their respective object tags according to the object tag categorization rule and the data item identifiers.

In some embodiments, the management backend can collect regional policies of all regions and extract data items involved in the regional policies. It can be understood that in the POS terminal device, the data items in the initial dataset may be from a plurality of regions and of different formats. For example, the regional policy of each region may be in a different language, which, for example, may be Chinese, English, or other languages. It can be understood that to facilitate processing of these data items, the POS terminal device allows a user to adjust the formats of the data items according to a preset format. In some embodiments, some rules can be preset such that all the data items with the same data item identifier meet the same format requirements. For example, the languages of the regional protocols may be unified, for example, may all be set to English, Chinese, etc. In some embodiments, a data item display format may be set. For example, a display format of a currency amount is set to have two decimal places, and the format of date is set to YYYY-MM-DD. As such, the management backend and the POS terminal device can process these data more efficiently and reduce the possibility of errors. In some embodiments, the data items whose formats have been adjusted can be identified to obtain data item identifiers corresponding to the data items. For example, each data item is numbered, e.g., by Arabic numerals or English letters. For example, the transaction amount is identified as #1 and the transaction time is identified as #2. Alternatively, the transaction amount is identified as *'A'* and the transaction time is identified as *'B',* and so on. It can be understood that the identification methods of the data items are not limited to thereto, and the details will not be described in the embodiments of the present disclosure.

In some embodiments, a categorization rule may be preset, which may be a classification rule, e.g., a categorization rule for a name acquisition object tag; and the data items are classified into the corresponding object tags according to the object tag categorization rule and the data item identifiers. Data items such as transaction amount, transaction time, and transaction location may be classified under an object tag "transaction data". In some embodiments, personal information such as name, mobile phone number, and identity card number may be classified into the object tag "personal information".

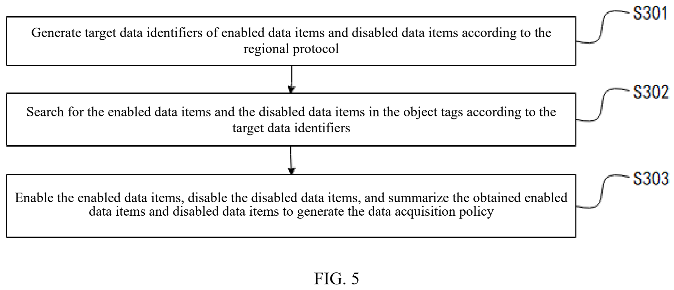

Referring to FIG. 5, in some embodiments, step S103 includes, but is not limited to, the following steps S301 to S303.

At S301, target data identifiers of enabled data items and disabled data items are generated according to the regional protocol.

At S302, the enabled data items and the disabled data items are searched for in the object tags according to the target data identifiers.

At S303, the enabled data items are enabled, the disabled data items are disabled, and the obtained enabled data items and disabled data items are summarized to generate the data acquisition policy, where the enabled data item is allowed to be accessed in the POS terminal device, and the disabled data item is prohibited from being accessed in the POS terminal device.

In some embodiments, data items included in the regional protocol, such as transaction amount, name, etc., may be extracted, and keywords in the regional protocol, such as that collection of transaction amount data items is strictly prohibited, that collection of name data items is allowed, etc., may be extracted. Then, whether to enable or disable these data items can be determined according to these keywords.

In some embodiments, the management backend can determine whether each data item is an enabled data item or a disabled data item according to the data items and the keywords extracted from the regional protocol, and add a corresponding target data identifier to each data item, e.g., add an identifier of 1 to the transaction amount, add an identifier of 2 to the transaction time, and so on. It can be understood that the target data identifier should correspond one-to-one to the data identifier of the data item in the object tag to facilitate search.

In some embodiments, according to the target data identifier, e.g., 1, the corresponding data item can be quickly found in the object tag according to the data item identifier, and then be enabled or disabled. After all the data items involved in the regional protocol are enabled or disabled, all the involved data items are summarized to generate the data acquisition policy.

It can be understood that the enabled data item is allowed to be accessed in the POS terminal device, and the disabled data item is prohibited from being accessed in the POS terminal device. In other words, according to the data acquisition policy, the POS terminal device can access the involved enabled data items, not the involved disabled data items, summarize all the enabled data items collected by the access to generate a target dataset, and then send the target dataset to the management backend.

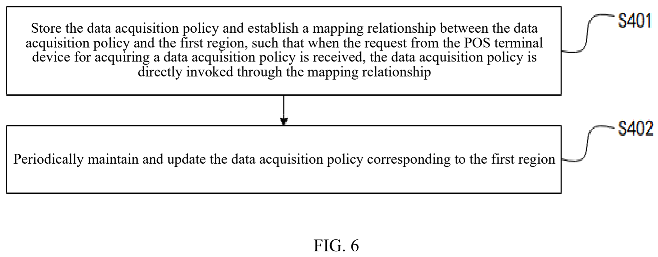

Referring to FIG. 6, after generating the data acquisition policy, the method further includes the following steps S401 to S402.

At S401, the data acquisition policy is stored and a mapping relationship between the data acquisition policy and the first region is established, such that when the request from the POS terminal device for acquiring a data acquisition policy is received, the data acquisition policy is invoked directly through the mapping relationship.

At S402, the data acquisition policy corresponding to the first region is periodically maintained and updated.

In some embodiments, after generating the data acquisition policy, the management backend can deliver the data acquisition policy to the POS terminal device, store the data acquisition policy locally, and establishes a mapping relationship between the data acquisition policy and the first region. In an example, after a mapping relationship between a data acquisition policy and a region A is established and subsequently the POS terminal device initiates a request to acquire a data acquisition policy corresponding to the region A, the management backend may directly deliver the locally stored data acquisition policy corresponding to the region A, without re-generating a data acquisition policy according to a regional policy/protocol of the region A.

In some embodiments, the management backend can periodically maintain and update the data acquisition policy corresponding to the first region, and if the regional protocol of the first region is updated, the data acquisition policy can be adjusted according to the updated part. For example, if the original regional protocol allows collection of names and the updated regional protocol prohibits collection of names, the corresponding data acquisition policy should be adjusted accordingly, to prohibit acquisition of name data items.

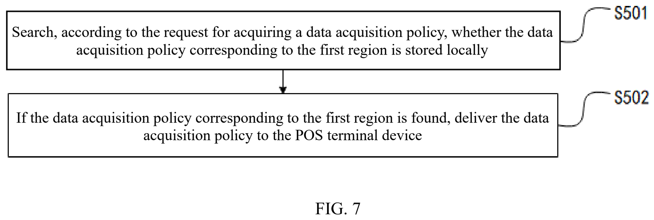

Referring to FIG. 7, in some embodiments, the data transmitting method further includes the following steps S501 to S502.

At S501, whether the data acquisition policy corresponding to the first region is stored locally, is searched, according to the request for acquiring a data acquisition policy.

At S502, if the data acquisition policy corresponding to the first region is found locally, the data acquisition policy is delivered to the POS terminal device.

In some embodiments, after receiving the request from the POS terminal device for acquiring a data acquisition policy, the management backend may search, according to the regional protocol, whether the data acquisition policy corresponding to the first region is stored locally. If the corresponding data acquisition policy is found locally, the corresponding data acquisition policy is directly delivered to the POS terminal device.

If the data acquisition policy corresponding to the first region is not found locally, a data acquisition policy is generated according to the regional protocol sent by the POS terminal device, and then sent to the POS terminal device.

In some embodiments, a default data acquisition policy is set in the management backend, and the data transmitting method further includes:
- if location information transmitted by the POS terminal device is not received, delivering the default data acquisition policy to the POS terminal device; or
- if the request from the POS terminal device for acquiring a data acquisition policy does not include the regional protocol corresponding to the first region, delivering the default data acquisition policy to the POS terminal device.

In some embodiments, a default data acquisition policy is set in the management backend. The default data acquisition policy is to be delivered to the POS terminal device when the management backend cannot generate a new data acquisition policy according to existing data.

In some embodiments, when the request from the POS terminal device for acquiring a data acquisition policy does not carry the location information of the first region, the regional protocol corresponding to the first region cannot be obtained according to the location information, so the management backend delivers the default data acquisition policy to the POS terminal device.

In some embodiments, no regional protocol is set for the first region, meaning that all data acquisition policies are applicable to the first region, so the management backend can directly deliver the default data acquisition policy to the POS terminal device.

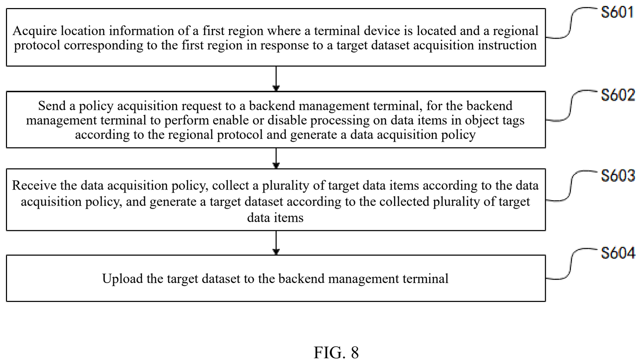

FIG. 8 shows a data transmitting method according to another embodiment of the present disclosure, which is applied to a POS terminal device and includes, but is not limited to, the following steps S601 to S604.

At S601, location information of a first region where a terminal device is located and a regional protocol corresponding to the first region are acquired in response to a target dataset acquisition instruction.

At S602, a policy acquisition request is sent to a management backend, for the management backend to perform enable or disable processing on data items in object tags according to the regional protocol and generate a data acquisition policy, where the policy acquisition request includes the location information of the first region and the regional protocol corresponding to the first region.

At S603, the data acquisition policy is received, a plurality of target data items are collected according to the data acquisition policy, and a target dataset is generated according to the collected plurality of target data items.

At S604, the target dataset is uploaded to the management backend.

In some embodiments, the terminal device can be any electronic device that supports NFC payment. In some embodiments, when NFC approaches the terminal device, a sensing area of the terminal device quickly detects an NFC transaction instruction, and the terminal invokes the POS terminal device and sends the target dataset acquisition instruction to the POS terminal device. In some embodiments, after acquiring the target dataset acquisition instruction, the POS terminal device first acquires execution permission of the terminal device to facilitate subsequent collection of data items. In some embodiments, the POS terminal device also needs to acquire location information corresponding to the first region where the terminal device is located. If the terminal device supports a GPS function, the POS terminal device may acquire current location information through GPS. In some embodiments, the POS terminal device may acquire the location information by querying an Internet Protocol (IP) address of a network to which the terminal is connected. In some embodiments, the terminal can acquire the location information by scanning a Wireless Fidelity (WI-FI) signal nearby, and synchronize the location information to the POS terminal device.

In some embodiments, since the data acquisition policy is generated according to the regional protocol, the regional protocol of the first region needs to be acquired. In some embodiments, the regional protocol of the first region may be directly found through search according to the location information of the first region.

In some embodiments, after acquiring the location information of the first region and the regional protocol corresponding to the first region, the POS terminal device sends a policy acquisition request to the management backend, such that the management backend performs enable or disable processing on data items in object tags according to the regional protocol, i.e., may determine according to requirements of the regional protocol whether the data items are to be enabled or disabled.

In some embodiments, a corresponding object tag may be found according to a data item identifier, e.g., a name identifier of 1, and data items in the object tag may be mapped one-to-one to data items involved in the regional protocol, such that the management backend can more quickly perform enable or disable processing on the target data items.

In some embodiments, after performing enable or disable processing on all data items involved in the regional protocol, the management backend generates a data acquisition policy. It can be understood that the data acquisition policy includes all data items that the POS terminal device is instructed to enable or disable.

In some embodiments, after receiving the data acquisition policy, the POS terminal device collects data items according to the data acquisition policy. For example, the enabled data items are collected, the disabled data items are not collected, and all the collected enabled data items are summarized as target data items to generate a target dataset. In some embodiments, after generating the target dataset, the POS terminal device sends the target dataset to the management backend.

In some embodiments, for a region whose location information cannot be acquired or a region for which no regional protocol has been set, a default dataset can be directly uploaded without sending a request for acquiring a data acquisition policy to the management backend. Alternatively, after delivering the default data acquisition policy, the management backend can collect data items to obtain a default dataset, and then upload the dataset.

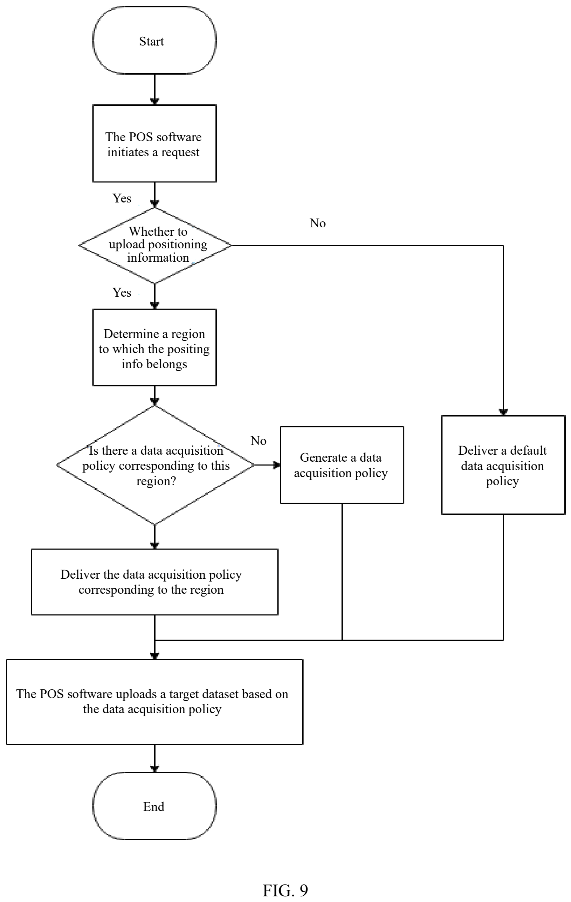

Referring to FIG. 9, the present disclosure provides an embodiment of an overall technical scheme. In some embodiments, after receiving the request from the POS terminal device for acquiring a data acquisition policy, the management backend determines whether the location information of the first region is uploaded in the request. If detecting that the location information of the first region is not uploaded in the request, the management backend sends the default data acquisition policy to the POS terminal device. Alternatively, if detecting that the location information of the first region is uploaded in the request, the management backend determines a region to which the location belongs (i.e., the first region).

In some embodiments, after obtaining the location information of the first region, the management backend can search whether there is locally a data acquisition policy having a mapping relationship with the first region. If there is locally a data acquisition policy having a mapping relationship with the first region, the management backend directly sends the data acquisition policy to the POS terminal device. If there is locally no data acquisition policy having a mapping relationship with the first region, the management backend performs enable or disable processing on data items in object tags according to the regional protocol of the first region. After processing all the data items involved in the regional protocol, the management backend generates a data acquisition policy according to the processing result, and delivers the data acquisition policy to the POS terminal device.

In some embodiments, after the management backend delivers the data acquisition policy to the POS terminal device, the POS terminal device collects the enabled data items according to the data acquisition policy, and does not collect the disabled data items. After collecting all data items required to be enabled by the data acquisition policy, the POS terminal device summarizes the data items to form a target dataset and uploads the target dataset to the management backend.

It can be understood that the data transmitting method provided in the present disclosure is not limited to the above embodiments, and the method provided in the present disclosure does not require separately deploying the system according to different regional protocols, thereby reducing the deployment costs and difficulty of the system and facilitates subsequent unified maintenance of the system.

In some embodiments, the management backend can further store historical data acquisition policies of the regions locally, such that subsequently the data acquisition policies can be directly invoked, and repeated generation of data acquisition policies is avoided, thereby saving system resources and speeding up the delivery speed of data acquisition policies.

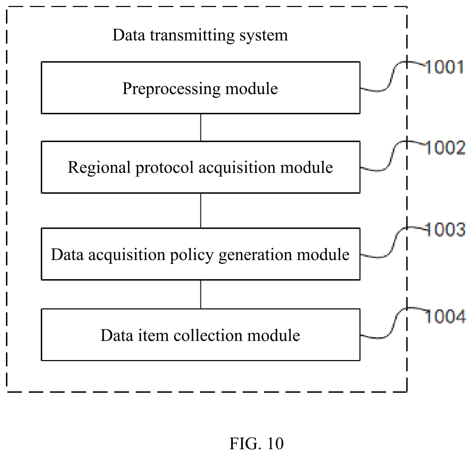

Referring to FIG. 10, in some embodiments, the present disclosure provides a data transmitting system, which is applied to a management backend and includes:
a preprocessing module 1001 configured for establishing an initial dataset, preprocessing data items in the initial dataset to attach data identifiers to the data items, and classifying the data items into corresponding object tags according to the data identifiers;
a regional protocol acquisition module 1002 configured for determining, in response to a request from a POS terminal device for acquiring a data acquisition policy, a first region where the POS terminal device is located and a regional protocol corresponding to the first region;
a data acquisition policy generation module 1003 configured for performing enable or disable processing on the data items in the object tags according to the regional protocol to obtain enabled data items and disabled data items, and generating a data acquisition policy according to the enabled data items and the disabled data items; and
a data item acquisition module 1004 configured for delivering the data acquisition policy to the POS terminal device, for the POS terminal device to collect data items according to the data acquisition policy.

In some embodiments, the POS terminal device has POS software installed thereon, and can replace a conventional POS machine to implement a data item collection function. In some embodiments, NFC is a wireless communication technology usually used in the field of mobile payment. It can be understood that the POS terminal device can implement an NFC payment function by connecting to an NFC card reader. For example, when a customer uses a bank card or electronic product with NFC information to pay, the customer only needs to place the bank card or electronic product near the POS terminal device, thus completing the payment process. In some embodiments, the POS terminal device communicates with an NFC card reader to implement the functions of reading payment information from a card or mobile phone of the customer and completing payment.

In some embodiments, the management backend is built on the data transmitting system and is controlled by the data transmitting system. In some embodiments, POS terminal devices in different regions share the same management backend, and the management backend can process regional protocols, generate data acquisition policies according to the regional protocols, and then send the data acquisition policies to the corresponding POS terminal devices. In some embodiments, the management backend can also view sales data, transaction volume, customer information, etc. according to the dataset uploaded by the POS terminal device for business analysis and decision-making. In some embodiments, the management backend may generate various statistical reports, such as turnover, sales, number of customers, etc., according to the dataset uploaded by the POS terminal device.

In some embodiments, the initial dataset is a set formed by collecting data items according to regional protocols of all regions and then summarizing all the data items involved in the regional protocols. It can be understood that since most regional protocols usually include some identical data items, data identifiers may be attached to all the data items collected. In some embodiments, the data items may be identified as transaction amount, transaction time, transaction location, transaction method, name, mobile phone number, identity number, bank card number, Alipay account number, WeChat payment account number, POS machine model, device number, operating system version, system logs, exception information, etc. Further, the data items may also be identified as Arabic numerals or English letters. For example, the transaction amount is identified as #1 and the transaction time is identified as #2, or the transaction amount is identified as *'A'* and the transaction time is identified as *'B',* and so on.

In some embodiments, the data items can be classified into the corresponding object tags according to the data identifiers. In some embodiments, the data items can be identified by level or category. For example, the following method may be adopted: different types of data items may be respectively classified into corresponding object tags. For example, the object tags can include transaction data, personal information, account information, device information, and the like. In some embodiments, for specific data items under each category, for example, specific data items under the object tag "transaction data" include transaction amount, transaction time, transaction location, etc. In some embodiments, personal information such as name, mobile phone number, and identity card number may be classified into the object tag "personal information". In some embodiments, data items related to the POS device, e.g., device number and operating system version, may also be classified into the object tag "device information". It can be understood that the attachment of the data identifiers to the data items and the classification of the data items into object tags allow for a clearer understanding of different types of data items to better protect user privacy, and also make it convenient for the system to quickly find related data items according to a regional policy.

In some embodiments, the first region can be any region defined according to geographical locations, for example, can be a district, a city, a province, a country, etc., which is not particularly limited in the embodiments of the present disclosures. In some embodiments, the management backend can respond to the request from the POS terminal device for acquiring a data acquisition policy, and because the request for acquiring a data acquisition policy includes the location information of the first region where the POS terminal device is located and the regional protocol corresponding to the first region, the first region where the POS terminal device is located and the regional protocol corresponding to the first region may be determined according to the request for acquiring a data acquisition policy.

In some embodiments, the regional protocol is a document that informs a website or mobile software (the POS terminal device in the present disclosure) how to collect and use data items. In some embodiments, the POS terminal device can perform enable or disable processing on the data items in the object tags according to the regional protocol to obtain enabled data items and disabled data items, and generate a data acquisition policy according to the enabled data items and the disabled data items. In a case where the regional protocol of the first region allows acquisition of the transaction time and name and prohibits acquisition of the operating system version, the management backend can find the corresponding data items according to the object tag, and manage enabling or disabling of the data items according to the regional protocol. The corresponding object tag can be found according to the regional protocol. For example, the object tag to which the transaction time belongs is founded to be "transaction data", and the data item "transaction time" under the object tag of the transaction data is enabled. In some embodiments, the object tag to which the name belongs is found to be "personal information", and then the data item "name" under the object tag "personal information" is enabled. In some embodiments, the object tag to which the operating system version belongs is found to be "device information", and then the data item "operating system version" under the object tag "device information" is enabled. It can be understood that if a corresponding data item is enabled in the finally generated data acquisition policy, the POS terminal device can perform data acquisition on the data item; and if the corresponding data item is disabled, the POS terminal device prohibits data acquisition on the data item. It can be understood that regardless of whether the management backend performs enable or disable processing on the data items, the operation is based on the regional protocol.

In some embodiments, the management backend can search all data items in the object tag in the regional protocol according to the object tag, perform enable or disable processing on the corresponding data items according to the regional protocol, and finally generate a data acquisition policy. In some embodiments, a universal tag may further be set. The universal tag includes data items that can be accessed in all regional protocols, such that during the generation of the data acquisition policy, there is no need to perform additional enable or disable processing.

In some embodiments, after the management backend delivers the data acquisition policy to the POS terminal device, the POS terminal device can collect data items according to the data acquisition policy, summarize the collected data items into a target dataset, and upload the target dataset.

Referring to FIG. 3, the management backend can maintain and manage the target dataset uploaded by the POS terminal device. In some embodiments, data of the same data items can be placed under the same data item identifier, and regions involved the corresponding data items, whether the corresponding data items are in an enabled state or a disabled state, and the like may be displayed.

It can be understood that the management backend can perform data backup according to the target dataset sent by the POS terminal device to prevent data loss. In some embodiments, the management backend can perform statistics and analysis on the dataset. In some embodiments, the POS terminal device may support data sharing among multiple devices, and after the collected data is sent to the management backend, data synchronization can be implemented to facilitate data sharing among multiple terminal devices.

According to the data transmitting method and system, the electronic device, and the storage medium provided in the present disclosure, an initial dataset is established, data items in the initial dataset are preprocessed to attach data identifiers to the data items, and the data items are classified into corresponding object tags according to the data identifiers; in response to a request from a POS terminal device for acquiring a data acquisition policy, a first region where the POS terminal device is located and a regional protocol corresponding to the first region are determined; enable or disable processing is performed on the data items in the object tags according to the regional protocol to obtain enabled data items and disabled data items, and a data acquisition policy is generated according to the enabled data items and the disabled data items; and the data acquisition policy is delivered to the POS terminal device, for the POS terminal device to collect data items according to the data acquisition policy. As such, all the regions share the same system, the system can generate corresponding data acquisition policies according to regional protocols of different regions, and the POS terminal device directly collects data items according to the respective data acquisition policy. Therefore, the system does not need to be deployed differently for different regions according to regional protocols of the different regions, such that the development cost and maintenance difficulty of the system are reduced.

Specific embodiments of the data transmitting system are basically the same as the specific embodiments of the data transmitting method, so the details will not be repeated herein. On the premise that the requirements of the embodiments of the present disclosure are met, the data transmitting system may further include other functional modules to implement the data transmitting method in the above embodiments.

An embodiment of the present disclosure further provides an electronic device, including a memory and a processor. The memory has a computer program stored therein. The computer program, when executed by the processor, causes the processor to implement the data transmitting method. The electronic device may include any smart terminal device such as a tablet computer or an in-vehicle computer.

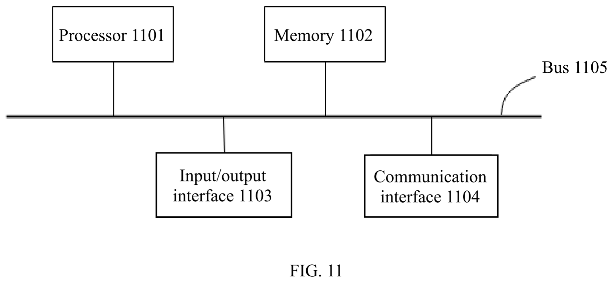

FIG. 11 shows a hardware structure of an electronic device according to another embodiment. Referring to FIG. 11, the electronic device includes:
- a processor 1101, which can be implemented by a general-purpose Central Processing Unit (CPU), a microprocessor, an Application Specific Integrated Circuit (ASIC), or one or more integrated circuits, and is configured for executing a related program to implement the technical schemes provided by the embodiments of the present disclosure;
- a memory 1102, which can be implemented in the form of a Read Only Memory (ROM), a static storage device, a dynamic storage device, a Random Access Memory (RAM), etc, can be configured to store an operating system and other application programs having program codes thereon stored, which when called and executed by the processor 1101 cause the processor 1101 to implement the data transmitting method according to the embodiments of the present disclosure in a case where the technical schemes provided by the embodiments of the present disclosure are implemented by software or firmware;
- an input/output interface 1103 configured for enabling input and output of information;
- a communication interface 1104 configured for realizing communication interaction between the electronic device and other devices, either through wired communication (e.g., USB, network cable, etc.) or through wireless communication (e.g., mobile network, Wi-Fi, Bluetooth, etc.);
- a bus 1105 configured for transmitting information between components of the electronic device (such as the processor 1101, the memory 1102, the input/output interface 1103, and the communication interface 1104).

The processor 1101, the memory 1102, the input/output interface 1103, and the communication interface 1104 are in communication connection with each other inside the electronic device through the bus 1105.

An embodiment of the present disclosure further provides a computer-readable storage medium, storing a computer program which, when executed by a processor, causes the processor to implement the data transmitting method according to the above embodiments of the present disclosure.

The memory, as a non-transitory computer-readable storage medium, can be configured for storing a non-transitory software program and a non-transitory computer-executable program. In addition, the memory can include a high-speed random access memory, and can also include a non-transitory memory, e.g., at least one magnetic disk storage device, flash memory device, or other non-transitory solid-state storage device. In some implementations, the memory may include memories located remotely from the processor, and the remote memories may be connected to the processor via a network. Examples of the network include, but are not limited to, the Internet, an intranet, a local area network, a mobile communication network, and combinations thereof.

The contents described in the embodiments of the present disclosure are for the purpose of illustrating the technical schemes of the embodiments of the present disclosure more clearly, and do not constitute a limitation on the technical schemes provided in the embodiments of the present disclosure. Those having ordinary skills in the art can know that with the evolution of technologies and the emergence of new application scenarios, the technical schemes provided in the embodiments of the present disclosure are also applicable to similar technical problems.

Those having ordinary skills in the art may understand that the technical scheme shown in the drawings does not constitute a limitation to the embodiments of the present disclosure, and more or fewer steps than those shown in the drawings may be included, or some steps may be combined, or different steps may be used.

The apparatus embodiments described above are merely examples. The units described as separate components may or may not be physically separated, i.e., they may be located in one place or may be distributed over a plurality of network units. Some or all of the modules may be selected according to actual needs to achieve the objectives of the schemes of the embodiments of the present disclosure.

Those having ordinary skills in the art can understand that all or some of the steps in the methods disclosed above and the functional modules/units in the system and the apparatus can be implemented as software, firmware, hardware, and appropriate combinations thereof.

In the specification and accompanying drawings of the present disclosure, the terms "first," "second," "third," "fourth," and so on (if any) are intended to distinguish between similar objects but do not necessarily indicate a specific order or sequence. It is to be understood that the data termed in such a way are interchangeable in appropriate circumstances, such that the embodiments of the present disclosure described herein can be implemented in orders other than the order illustrated or described herein. Moreover, the terms "include," "comprise," and any other variants thereof are intended to cover a non-exclusive inclusion. For example, a process, method, system, product, or device that includes a list of steps or units is not necessarily limited to those expressly listed steps or units, but may include other steps or units not expressly listed or inherent to such a process, method, product, or device.

It is to be understood that in the present disclosure, "at least one" and "several" mean one or more and "a plurality of" mean two or more. The term "and/or" is used for describing an association between associated objects and representing that three associations may exist. For example, "A and/or B" may indicate that only A exists, only B exists, and both A and B exist, where A and B may be singular or plural. The character "/" generally indicates an "or" relationship between the associated objects. "At least one of" and similar expressions refer to any combination of items listed, including one item or any combination of a plurality of items. For example, at least one of a, b, or c may represent a, b, c, "a and b," "a and c," "b and c," or "a, b, and c," where a, b, and c may be singular or plural.

In the several embodiments provided in the present disclosure, it is to be understood that the disclosed system and method may be implemented in other manners. For example, the described system embodiments are only illustrative. For example, the division of the units is merely a logical function division and other division manners may be used in practical implementations. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate. Parts displayed as units may or may not be physical units, and may be located in one position, or may be distributed over a plurality of network units. Some or all of the units may be selected according to actual needs to achieve the objects of the scheme of the embodiments of the present disclosure.

In addition, functional units in the embodiments of the present disclosure may be integrated into one processing unit, or each of the units may exist alone physically, or two or more units may be integrated into one unit. The integrated unit may be implemented in a form of hardware, or may be implemented in a form of a software functional unit.

The integrated unit may be stored in a computer-readable storage medium if implemented in the form of a software functional unit and sold or used as an independent product. Based on such an understanding, the technical schemes of the present disclosure essentially, or the part contributing to the related art, or all or some of the technical schemes may be implemented in the form of a software product. The computer software product is stored in a storage medium, and includes several instructions for instructing a computer device (which may be a personal computer, a server, a network device, or the like) to execute all or some of the steps of the methods described in the embodiments of the present disclosure. The above storage medium includes: any medium that can store program codes, such as a USB flash drive, a removable hard disk, a read-only memory (ROM), a random access memory (RAM), a magnetic disk, or an optical disk.

Although some embodiments of the present disclosure are described above with reference to the accompanying drawings, these embodiments are not intended to limit the protection scope of the embodiments of the present disclosure. Any modifications, equivalent replacements and improvements made by those having ordinary skills in the art without departing from the scope and essence of the embodiments of the present disclosure shall fall within the protection scope of the claimed embodiments of the present disclosure.

## Claims

1. A data transmitting method, applied to a management backend, the method comprising:
establishing an initial dataset, preprocessing each of a plurality of data items in the initial dataset to be attached with a respective one of a plurality of data identifiers, and classifying each of the plurality of data items into a respective one of a plurality of object tags according to the respective data identifier;
in response to a request from a point of sale, POS, terminal for acquiring a data acquisition policy, determining a first region where the POS terminal device is located and a regional protocol corresponding to the first region;
performing enable or disable processing on the plurality of data items in the plurality of object tags according to the regional protocol to obtain an enabled data item and a disabled data item, and generating a data acquisition policy according to the enabled data item and the disabled data item; and
delivering the data acquisition policy to the POS terminal device, for the POS terminal device to collect data items according to the data acquisition policy.

2. The data transmitting method of claim 1, wherein establishing the initial dataset, preprocessing each of the plurality of data items in the initial dataset to be attached with the respective one of the plurality of data identifiers, and classifying each of the plurality of data items into the respective one of the plurality of object tags according to the respective data identifier:
establishing the initial dataset, and adjusting formats of the plurality of data items in the initial dataset according to a preset format;
identifying each of the plurality of data items whose format has been adjusted to obtain the respective data item identifier;
acquiring an object tag categorization rule; and
classifying each of the plurality of data items into the respective object tag according to the object tag categorization rule and the respective data item identifier.

3. The data transmitting method of claim 1, wherein performing the enable or disable processing on the plurality of data items in the plurality of object tags according to the regional protocol to obtain the enabled data item and the disabled data item, and generating the data acquisition policy according to the enabled data item and the disabled data item comprises:
generating target data identifiers of enabled data items and disabled data items according to the regional protocol;
searching for the enabled data items and the disabled data items in the plurality of object tags according to the target data identifiers; and
enabling the enabled data item, disabling the disabled data item, and summarizing the obtained enabled data item and disabled data item to generate the data acquisition policy, wherein the enabled data item is allowed to be accessed in the POS terminal device, and the disabled data item is prohibited from being accessed in the POS terminal device.

4. The data transmitting method of claim 3, wherein after generating the data acquisition policy, the method further comprises:
storing the data acquisition policy and establishing a mapping relationship between the data acquisition policy and the first region, such that when the request from the POS terminal device for acquiring a data acquisition policy is received, the data acquisition policy is invoked through the mapping relationship; and
periodically maintaining and updating the data acquisition policy corresponding to the first region.

5. The data transmitting method of claim 1, further comprising:
searching, according to the request for acquiring a data acquisition policy, whether the data acquisition policy corresponding to the first region is stored locally;
in response to the data acquisition policy corresponding to the first region being found, delivering the data acquisition policy to the POS terminal device.

6. The data transmitting method of claim 1, wherein a default data acquisition policy is set in the management backend, and the method further comprises:
in response to location information transmitted by the POS terminal device being not received, delivering the default data acquisition policy to the POS terminal device; or
in response to the request from the POS terminal device for acquiring a data acquisition policy not comprising the regional protocol corresponding to the first region, delivering the default data acquisition policy to the POS terminal device.

7. A data transmitting method, applied to a point of sale, POS, terminal, the method comprising:
acquiring location information of a first region where the POS terminal device is located and a regional protocol corresponding to the first region in response to a target dataset acquisition instruction;
sending a policy acquisition request to a management backend, for the management backend to perform enable or disable processing on a data item in an object tag according to the regional protocol and generate a data acquisition policy, wherein the policy acquisition request comprises the location information of the first region and the regional protocol corresponding to the first region;
receiving the data acquisition policy, collecting a plurality of target data items according to the data acquisition policy, and generating a target dataset according to the collected plurality of target data items; and
uploading the target dataset to the management backend.

8. A data transmitting system, applied to a management backend, the system comprising:
a preprocessing module configured for establishing an initial dataset, preprocessing each of a plurality of data items in the initial dataset to be attached with a respective one of a plurality of data identifiers, and classifying each of the plurality of data items into a respective one of a plurality of object tags according to the respective data identifier;
a regional protocol acquisition module configured for determining, in response to a request from a point of sale, POS, terminal for acquiring a data acquisition policy, a first region where the POS terminal device is located and a regional protocol corresponding to the first region;
a data acquisition policy generation module configured for performing enable or disable processing on the plurality of data items in the plurality of object tags according to the regional protocol to obtain an enabled data item and a disabled data items, and generating a data acquisition policy according to the enabled data item and the disabled data item; and
a data item acquisition module configured for delivering the data acquisition policy to the POS terminal device, for the POS terminal device to collect data items according to the data acquisition policy.

9. An electronic device, comprising a memory and a processor, wherein the memory is configured for storing a computer program which, when executed by the processor, causes the processor to perform the data transmitting method of any one of claims 1 to 7, which is applied to a POS terminal device.

10. A computer-readable storage medium, having a computer program stored therein, wherein the computer program, when executed by a processor, causes the processor to perform the data transmitting method of any one of claims 1 to 7, which is applied to a POS terminal device.
